# EUROPEAN PATENT SPECIFICATION

(11) **EP 2 491 637 B1**
(45) Date of publication and mention of the grant of the patent: **30.03.2016**
(21) Application number: 10825692.6
(22) Date of filing: 21.10.2010
(51) Int. Cl.: H02J 7/00, H01M 10/42

(54) **CIRCUITRY FOR BALANCING CHARGING OF SERIES CONNECTED BATTERY CELLS**
SCHALTKREIS ZUM LADUNGSAUSGLEICH VON SERIELL GESCHALTETEN BATTERIEZELLEN
CIRCUITS POUR ÉQUILIBRER LA CHARGE D'ÉLÉMENTS DE BATTERIE MONTÉS EN SÉRIE

(30) Priority: 30.08.2010 US 871471; 21.10.2009 US 253651 P
(43) Date of publication of application: 29.08.2012
(73) Proprietor: K2 Energy Solutions, Inc., Henderson, NV 89074 (US)
(72) Inventor: SUNDERLIN, Tim, A., Henderson NV 89002 (US)
(74) Representative: Hamer, Christopher K.
(86) International application number: PCT/US2010/053595
(87) International publication number: WO 2011/050191

(56) References cited:
- EP-A2- 1 148 612
- WO-A2-02/47166
- US-A- 4 379 989
- US-A1- 2004 164 708
- US-A1- 2008 012 641
- US-A1- 2008 136 376
- US-B1- 6 211 650
- US-B1- 6 724 593
- "LM101A/LM201A/LM301A Operational Amplifiers", , 1 January 1999 (1999-01-01), XP055080655, Retrieved from the Internet: URL:http://www.ti.com/lit/ds/symlink/lm301 a-n.pdfLM101A/LM201A/LM301A Operational Amplifiers [retrieved on 2013-09-24]

## Description

### FIELD OF THE INVENTION

The present invention relates to battery charging circuitry to balance the charging of series connected battery cells, such as lithium ion battery cells.

The invention further prevents damage to battery cells if the cells are connected to the battery charging circuitry in reverse polarity.

### BACKGROUND OF THE INVENTION

The nominal voltage of a fully charged lithium iron phosphate (LFP) battery cell is approximately 3.65 volts. This voltage is battery chemistry dependent and can vary for battery cells having other lithium ion chemistries.

When charging series connected lithium ion battery cells, the cells do not necessarily charge at the same rate. Thus one of the battery cells may begin to exceed its nominal voltage before the other battery cell, or cells, reach their nominal voltage(s). As battery chargers typically do not stop charging the series connected cells until the cumulative series voltage of the cells reaches a threshold voltage, the cell which first reaches its nominal voltage may end up being over-charged, which can damage the particular battery cell.

There can also be a problem if the battery charger is connected to one or more battery cells in reverse polarity.

The present invention is provided to address these and other problems.
EP-A2-1,148,612 describes a voltage regulator including a voltage control circuit, fabricated on a semiconductor.
WO-A2-02/47166 describes a way of protecting a differential pair of bipolar transistors.
US-A1-2008/0,012,641 describes an operational amplifier with protection diodes.
"LM101A/LM201A/LM301A Operational Amplifiers", 1 January 1999, XP055080655 describes different types of operational amplifiers.

### BRIEF DESCRIPTION OF THE DRAWINGS

Figure 1 is a block diagram of a battery charger coupled to two series connected battery cells, in accordance with the present invention;
Figure 2 is a schematic of a first embodiment of a circuit contained in the battery charger of Figure 1, the circuit for balancing the charging of the battery cells; and
Figure 3 is a schematic of a second embodiment of a circuit contained in the battery charger of Figure 1, the circuit for balancing the charging of the battery cells.

### DETAILED DESCRIPTION

While this invention is susceptible of embodiments in many different forms, there is shown in the drawings and will herein be described in detail, preferred embodiments of the invention with the understanding that the present disclosure is to be considered as an exemplification of the principles of the invention and is not intended to limit the broad aspects of the invention to the embodiments illustrated.

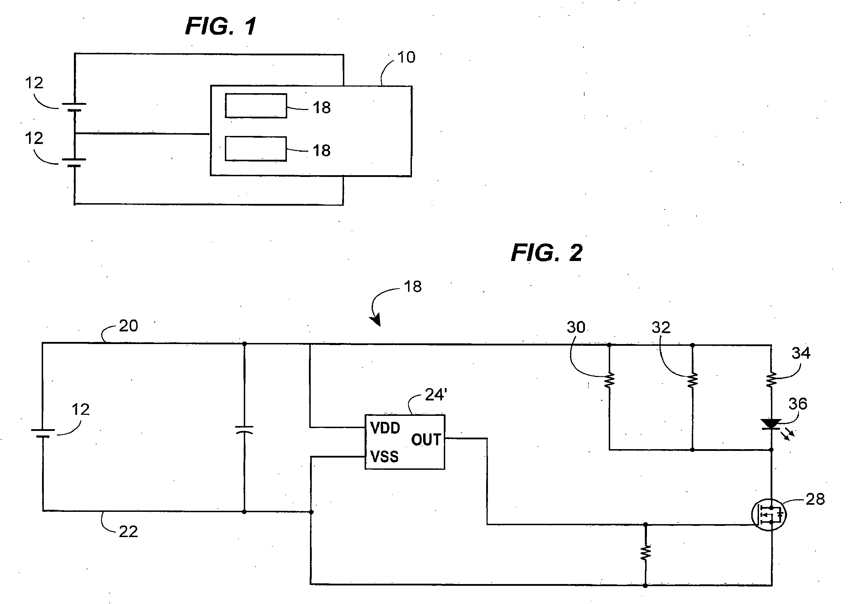

A battery charger 10 coupled to two battery cells 12, is illustrated in Figure 1. The battery cells 12 may be conventional lithium iron phosphate battery cells, of the type having a nominal fully charged voltage of 3.65 volts, or may be another type of rechargeable battery cell.

Associated with the battery charger 10 are a plurality of battery charging circuits 18, one associated with each of the battery cells 12.

A schematic of a first embodiment of the battery charging circuit 18 is illustrated in Figure 2. The battery charging circuit 18 includes a first electrode 20 coupled to a positive terminal its respective battery cell 12 and a second electrode 22 coupled to a negative terminal of its respective battery cell 12.

The battery charging circuit 18 includes a voltage detector 24, such as an S-80835 IC voltage detector having a 3.5 volt detection voltage value, sold by Seiko Instruments, Inc., Japan. The battery charging circuit 18 further includes an electronic switch 28, such as a Zetex N-channel MOSFET, model ZXMN6A07FTA, sold by Diodes Incorporated of Dallas, Texas. The battery charging circuit 18 also includes a conventional yellow LED 36.

In normal operation, the battery charger 18 provides current through the serially connected cells 12. The voltage detector 24 associated with each of the cells 12 monitors the voltage across its respective one of the cells 12. As long as the voltage is sufficiently low, the output of the voltage detector 24 maintains the electronic switch 28 in an open position. Thus the charging current will flow through the respective cell 12. However when the voltage detector 24 detects the voltage across its respective cell 12 has reached a voltage in the range of 3.6 to 3.68 volts, the output of the voltage detector 24 causes the electronic switch 28 to close, thus shunting charging current around that particular cell 12, through resistors 30, 32 and 34, and effectively stopping the charging of that particular cell 12. Also this shunted current also illuminates the LED 36. Multiple resistors are utilized in parallel to reduce the current through any particular one of the resistors, thus permitting lower wattage resistors to be utilized.

Should the voltage across that particular cell 12 subsequently drop below 3.5 volts, the voltage detector will cause the electronic switch 28 to again open, causing the full amount of charging current to flow through the particular cell 12.

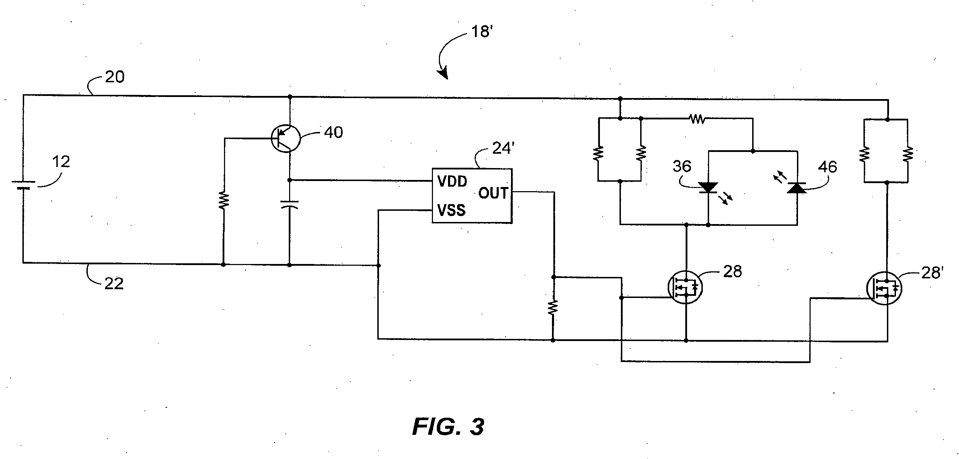

A second embodiment of the present invention is illustrated in Figure 3. The second embodiment protects the battery cell should the battery cell be connected to the charger in reverse polarity. If in reverse polarity, typical battery chargers are fine, as typically they are current limited to allow only a limited amount of current to charge the battery cells. Further the battery cells would typically not be damaged until the conventional charger depletes the stored charge of the battery cells being charged. At that point, the conventional battery cell charger would typically attempt to charge the battery cells in the reverse direction. An Ideal capacitor, rather than a battery cell, would charge to negative polarity. However battery cells would tend to develop internal shorts due to the chemistry involved.

In the embodiment illustrated in Figure 2, the voltage detector used determines when to do the balance current bleed, or overflow, and this item could be damaged due to a reversed input polarity.

A second embodiment of the battery charging circuit 18' is illustrated in Figure 3. This circuit 18' is provided to protect the voltage detector 24 should the battery cell 12 be connected in reverse polarity.

The circuit 18' includes a diode-like device in the form of a PNP transistor 40 in the circuit path to shunt, and thereby eliminate, any current from reverse polarity connections for the voltage detector 24.

The battery charging circuit 18' according to the second embodiment includes a voltage detector 24' having a lower detection voltage value than the voltage detector 24 discussed above, to compensate for the approximately 0.2v voltage drop across the transistor 40. The voltage detector 24' may be an NCP300LSNT1G voltage detector, sold by ON Semiconductor, Phoenix, AZ, or an S-80834CLMC-B6TT2G voltage detector, sold by Seiko Instruments, Japan.

The second embodiment 18' further includes a second electronic switch 28' and a second pair of parallel resistors, in parallel with the first electronic switch and corresponding parallel pair of resistors, to reduce the amount of shunted current through the first electronic switch 28. The first and second electronic switches 28, 28' include an inherent diode characteristic which permits current flow should the battery cell 12 be installed in a reverse-biased manner. This current flow illuminates a Red LED 46 to indicate when current is flowing in the wrong direction. The electronic switches 18, 18' and the LED's 36, 46 are not adversely affected by a reverse battery cell connection.

It should be noted that even with the circuit 18', it is possible to connect the charger to the battery cell 12 in reverse polarity and deplete the charge of the battery cell. The polarity protection is for the balancing circuit when connecting to the battery cells.

While specific embodiments have been illustrated and described, numerous modifications may come to mind without significantly departing from the scope of the invention, and the scope of protection is only limited by the scope of the accompanying claim.

## Claims

1. A circuit for preventing overcharging a battery cell (12) comprising:
a voltage detector (24) for monitoring a voltage across a battery cell (12), the voltage detector (24) configured to determine when the voltage across the battery cell (12) is greater than a first threshold voltage;
an electronic switch (28) responsive to the voltage detector (24) and configured to shunt current around the battery cell (12) when the voltage detector (24) has determined the battery cell (12) voltage is greater than the first threshold voltage, wherein the electronic switch (28) comprises a MOSFET semiconductor device coupled across the battery cell (12) the MOSFET semiconductor device having an inherent diode characteristic adapted to permit current flow through the MOSFET semiconductor device when the battery cell (12) is connected in reverse polarity **characterized in that** it further comprises
an indicator (46) coupled in series with the MOSFET semiconductor device for indicating a reverse polarity connection of the battery cell (12) to the voltage detector (24); and
a semiconductor device (40) coupled across voltage detection inputs of the voltage detector (24), the semiconductor device (40) adapted to shunt current across the voltage detection inputs of the voltage detector (24) when the battery cell (12) is connected in reverse polarity to the voltage detector.

2. The circuit of claim 1, wherein the semiconductor device (40) of the polarity protection circuit comprises a transistor.

3. The circuit of claim 2, wherein the transistor comprises a bipolar transistor.

4. The circuit of claim 3, wherein the bipolar transistor comprises a PNP transistor.

5. The circuit of claim 1 wherein the indicator (46) comprises an LED.

6. The circuit of claim 1 wherein:
the voltage detector (24) is configured to determine when the voltage across the battery cell (12) is less than a second threshold voltage; and
the electronic switch (28) is configured to cease shunting current around the battery cell (12) when the voltage detector (24) has determined the voltage across the battery cell (12) is less than the second threshold voltage.

7. The circuit of claim 6 wherein the second threshold voltage is less than the first threshold voltage.

8. The circuit of claim 7 wherein the electronic switch (28) comprises a semiconductor device, preferably a plurality of semiconductor devices coupled in parallel.

9. The circuit of claim 1 wherein the electronic switch (28) comprises a plurality of MOSFET semiconductor devices coupled in parallel.

10. The circuit of claim 1 including an indicator (36) for indicating that current is being shunted around the battery cell (12).

11. The circuit of claim 1 including an indicator (36) for visually indicating that current is being shunted around the battery cell (12).

12. The circuit of claim 11 wherein the visual indicator (36) comprises an LED coupled in series with the electronic switch (28).

## Patentansprüche

1. Schaltung zum Verhindern des Überladens einer Batteriezelle (12), wobei die Schaltung Folgendes umfasst:
einen Spannungsdetektor (24) zum Überwachen einer Spannung in einer Batteriezelle (12), wobei der Spannungsdetektor (24) dafür konfiguriert ist, zu bestimmen, wann die Spannung in der Batteriezelle (12) größer als eine erste Schwellenspannung ist;
einen elektronischen Schalter (28), der auf den Spannungsdetektor (24) anspricht und dafür konfiguriert ist, den Strom zu der Batteriezelle (12) zu überbrücken, wenn der Spannungsdetektor (24) bestimmt hat, dass die Spannung der Batteriezelle (12) größer als die erste Schwellenspannung ist, wobei der elektronische Schalter (28) eine MOSFET-Halbleitervorrichtung umfasst, die mit der Batteriezelle (12) gekoppelt ist, wobei die MOSFET-Halbleitervorrichtung eine inhärente Diodenkennlinie aufweist, die dafür ausgelegt ist, den Stromfluß durch die MOSFET-Halbleitervorrichtung zu ermöglichen, wenn die Batteriezelle (12) verpolt angeschlossen ist, **dadurch gekennzeichnet, dass** er ferner Folgendes umfasst:
eine Anzeige (46), die mit der MOSFET-Halbleitervorrichtung in Reihe geschaltet ist, um eine Verpolung der Batteriezelle (12) mit dem Spannungsdetektor (24) anzuzeigen; und
eine Halbleitervorrichtung (40), die mit Spannungserfassungseingängen des Spannungsdetektors (24) gekoppelt ist, wobei die Halbleitervorrichtung (40) dafür ausgelegt ist, Strom an den Spannungserfassungseingängen des Spannungsdetektors (24) zu überbrücken, wenn die Batteriezelle (12) verpolt an den Spannungsdetektor angeschlossen ist.

2. Schaltung nach Anspruch 1, wobei die Halbleitervorrichtung (40) der Polaritätsschutzschaltung einen Transistor umfasst.

3. Schaltung nach Anspruch 2, wobei der Transistor einen Bipolartransistor umfasst.

4. Schaltung nach Anspruch 3, wobei der Transistor einen PNP-Transistor umfasst.

5. Schaltung nach Anspruch 1, wobei die Anzeige (46) eine LED umfasst.

6. Schaltung nach Anspruch 1, wobei:
der Spannungsdetektor (24) dafür konfiguriert ist, zu bestimmen, wann die Spannung in der Batteriezelle (12) kleiner als eine zweite Schwellenspannung ist; und
der elektronische Schalter (28) dafür konfiguriert ist, das Überbrücken des Stroms zu der Batteriezelle (12) zu unterlassen, wenn der Spannungsdetektor (24) bestimmt hat, dass die Spannung der Batteriezelle (12) kleiner als die zweite Schwellenspannung ist.

7. Schaltung nach Anspruch 6, wobei die zweite Schwellenspannung kleiner als die erste Schwellenspannung ist.

8. Schaltung nach Anspruch 7, wobei der elektronische Schalter (28) eine Halbleitervorrichtung und vorzugsweise eine Vielzahl von Halbleitervorrichtungen umfasst, die parallel geschaltet sind.

9. Schaltung nach Anspruch 1, wobei der elektronische Schalter (28) eine Vielzahl von MOSFET-Halbleitervorrichtungen umfasst, die parallel geschaltet sind.

10. Schaltung nach Anspruch 1, die eine Anzeige (36) umfasst, die anzeigt, dass der Strom um die Batteriezelle (12) herum überbrückt wird.

11. Schaltung nach Anspruch 1, die eine Anzeige (36) umfasst, die visuell anzeigt, dass der Strom um die Batteriezelle (12) herum überbrückt wird.

12. Schaltung nach Anspruch 11, wobei die visuelle Anzeige (36) eine LED umfasst, die mit dem elektronischen Schalter (28) in Reihe geschaltet ist.

## Revendications

1. Circuit destiné à empêcher la surcharge d'une cellule de batterie (12) comprenant :
un détecteur de tension (24) pour surveiller une tension aux bornes d'une cellule de batterie (12), le détecteur de tension (24) étant configuré de façon à déterminer le moment auquel la tension aux bornes de la cellule de batterie (12) est supérieure à une première tension seuil ;
un commutateur électronique (28) sensible au détecteur de tension (24) et configuré de façon à dériver du courant autour de la cellule de batterie (12) lorsque le détecteur de tension (24) a déterminé le fait que la tension de la cellule de batterie (12) est supérieure à la première tension seuil, cas dans lequel le commutateur électronique (28) comporte un dispositif à semiconducteur MOSFET couplé aux bornes de la cellule de batterie (12), alors que le dispositif à semiconducteur MOSFET possède une caractéristique de diode inhérente conçue pour autoriser le passage de courant à travers le dispositif à semiconducteur MOSFET lorsque la cellule de batterie (12) est connectée en polarité inverse, **caractérisé en ce qu'**il comprend en outre :
un indicateur (46) couplé en série avec le dispositif à semiconducteur MOSFET pour indiquer, au détecteur de tension (24), une connexion de polarité inverse de la cellule de batterie (12) ; et
un dispositif à semiconducteur (40) couplé aux entrées de détection de tension du détecteur de tension (24), alors que le dispositif à semiconducteur (40) est conçu pour dériver le courant aux entrées de détection de tension du détecteur de tension (24) lorsque la cellule de batterie (12) est connectée en polarité inverse au détecteur de tension.

2. Circuit selon la revendication 1, le dispositif à semiconducteur (40) du circuit de protection de polarité comprenant un transistor.

3. Circuit selon la revendication 2, le transistor comprenant un transistor bipolaire.

4. Circuit selon la revendication 3, le transistor bipolaire comprenant un transistor PNP.

5. Circuit selon la revendication 1, l'indicateur (46) comprenant une DEL.

6. Circuit selon la revendication 1 :
le détecteur de tension (24) étant configuré de façon à déterminer le moment auquel la tension aux bornes de la cellule de batterie (12) est inférieure à une deuxième tension seuil ; et
le commutateur électronique (28) étant configuré de façon à cesser la dérivation de courant autour de la cellule de batterie (12) lorsque le détecteur de tension (24) a déterminé le fait que la tension aux bornes de la cellule de batterie (12) est inférieure à la deuxième tension seuil.

7. Circuit selon la revendication 6, la deuxième tension seuil étant inférieure à la première tension seuil.

8. Circuit selon la revendication 7, le commutateur électronique (28) comprenant un dispositif à semiconducteur, de préférence une pluralité de dispositifs à semiconducteur couplés en parallèle.

9. Circuit selon la revendication 1, le commutateur électronique (28) comprenant une pluralité de dispositifs à semiconducteur MOSFET couplés en parallèle.

10. Circuit selon la revendication 1, incluant un indicateur (36) pour indiquer le fait que le courant est mis en dérivation autour de la cellule de batterie (12).

11. Circuit selon la revendication 1, incluant un indicateur (36) pour indiquer visuellement le fait que le courant est mis en dérivation autour de la cellule de batterie (12).

12. Circuit selon la revendication 11, l'indicateur visuel (36) comprenant une DEL couplée en série avec le commutateur électronique (28).
